# EUROPÄISCHE PATENTANMELDUNG

(11) **EP 2 392 491 A2**
(43) Veröffentlichungstag der Anmeldung: **07.12.2011**
(21) Anmeldenummer: 11004137.3
(22) Anmeldetag: 19.05.2011
(51) Int. Cl.: B60P 1/04, B60P 7/08

(54) **Fahrzeugaufbau mit einer Ladefläche und Zurrpunkten entlang der Ladefläche**

(30) Priorität: 07.06.2010 DE 102010022855
(71) Anmelder: Fiolka, Renate, 56751 Polch (DE)
(72) Erfinder: Fiolka, Renate, 56751 Polch (DE)
(74) Vertreter: Grommes, Karl F.

(57) **Zusammenfassung**

Es soll ein Fahrzeugaufbau (2) mit einer Ladefläche (3) und Zurrpunkten (4) entlang der Ladefläche (3) weitergebildet werden. Um bei einem solchen Fahrzeugaufbau (2) zu erreichen, dass die notwendige Ladungssicherung einfacher, effizienter und sicherer zu realisieren ist, sind erfindungsgemäß in etwa über den Zurrpunkten (4, 4') der Ladefläche (3) in den oberen Ecken (8, 8') des Fahrzeugaufbaus (2) Umlenkelemente (9) für einen Zurrgurt (5) angeordnet, wobei jedes Umlenkelement (9) mit einem elastischen Rückholorgan (10) verbunden ist, welches eine beliebige Entfernung des Zurrgurtes (5) aus der Ecke (8, 8') des Fahrzeugaufbaus (2) und eine Auflage auf dem Transportgut (7) zum Zwecke der Ladungssicherung erlaubt.

## Beschreibung

### Technisches Gebiet:

Die Erfindung betrifft einen Fahrzeugaufbau mit einer Ladefläche, wie er zum Transport von Stückgütern tagtäglich unzählige Male zum Einsatz kommt. Dazu zählen Zurrpunkte entlang der Ladefläche sowie Zurrmittel, insbesondere mit Spannelementen versehene Zurrgurte, zum Niederzurren von Transportgütern zur Ladungssicherung.

Nur in seltenen Fällen sind Transportgut und Fahrzeugaufbau in Form und Abmessung so aufeinander abgestimmt, dass das Transportgut vom Fahrzeugaufbau lückenlos umschlossen wird, das Transportgut also formschlüssig im Fahrzeugaufbau ruht. In einem solchen Falle kann das Transportgut von den Bordwänden (Stirn-, Rück- und Seitenwänden) des Fahrzeugaufbaus gesichert werden, wenn diese entsprechend dimensioniert sind.

Vorliegend soll jedoch ein Fahrzeugaufbau betrachtet und verbessert werden, welcher nicht bereits die Möglichkeit der Ladungssicherung in sich trägt, sondern dazu spezieller Maßnahmen und damit auch eigener Hilfsmittel bedarf. Eine solche Ladungssicherung erfolgt (bis auf die Ladefläche) praktisch unabhängig vom Fahrzeugaufbau, d. h. es können feste Bordwände fehlen und sonstige Aufbauten nichts weiter als ein Wetterschutz sein.

Zur Ladungssicherung von Transportgütern auf der Ladefläche von Transportfahrzeugen (sei es einzeln und unmittelbar oder unter Zwischenschaltung von Paletten o. Ä.) werden in der Regel Spanngurte eingesetzt. Diese werden lose im Transportfahrzeug mitgeführt und an unterschiedlichen Plätzen gelagert. Das ordnungsgemäße Anlegen und Aktivieren (Spannen) der Spanngurte ist bisweilen umständlich und bedarf oftmals einer Korrektur, insbesondere bei großvolumigen Transportgütern, bei denen mal mehr, mal weniger Freiraum bis zur Decke oder Plane des Transportfahrzeuges verbleibt.

Unter solchen Umständen kann sich das Sichern nicht nur umständlich und zeitaufwendig gestalten, sondern es kann auch gefährlich werden, insbesondere durch Verwendung von Leitern, das Hochfahrenlassen mittels Stapler o. Ä.

### Darstellung der Erfindung:

Hier setzt die Erfindung an. Sie möchte einen Fahrzeugaufbau vorschlagen, bei dem die notwendige Ladungssicherung einfacher, effizienter und sicherer zu realisieren ist.

Gelöst wird diese Aufgabe mit den kennzeichnenden Merkmalen von Anspruch 1. Zweckmäßige Weiterbildungen geben die nachgeordneten Unteransprüche an.

Zum Kerngedanken der Erfindung zählt, dass sie ein spezielles Rückholorgan oder eine spezielle Rückholvorrichtung vorsieht, welche an bestimmten Stellen im Innern eines Laderaumes zu positionieren und mit dem Spanngurt zu verbinden ist, um mit diesem fortan zusammenzuwirken. Ohne äußere Einwirkung gerät der Spanngurt selbsttätig in eine optimale Ruhelage. Und aus dieser Ruhelage kann er von Hand in eine optimale Gebrauchslage gezogen und gleich anschließend von Hand mittels des Spannelementes verspannt werden.

Die Rückholvorrichtungen sind insbesondere im obersten Bereich der rechten und linken Seite (nahe der Decke) eines Fahrzeugaufbaus anzubringen. Die Ruhelage des Spanngurtes lässt sich wie folgt beschreiben. Während der Spanngurt einseitig an einem Zurrpunkt der Ladefläche angebracht ist, insbesondere in einer Zurröse am Boden des Laderaums eingehängt ist, von wo er zur ersten Rückholvorrichtung aufsteigt und entlang der Decke zur zweiten Rückholvorrichtung weiterführt, hängt er von dieser mit seinem freien (losen) Ende zugbereit herab.

Bei dieser Anordnung verteilt sich eine übliche Gurtlänge von ca. 7,5 m zu je ein Drittel auf die beiden Seiten und die Decke des Laderaumes, und zwar derart, dass der Gurt an keiner Stelle stört, weil der Querschnitt des Laderaumes insgesamt frei bleibt. Egal, wie weit der Laderaum bei Bedarf später zugesetzt wird, es kann der Spanngurt immer aus äußerster Position ohne Hilfsmittel (wie z. B. Leiter, Stapler o. Ä.) vom Boden (Gehsteig, Fahrbahn) aus herangezogen und problemlos verzurrt werden.

Vorteilhaft sind die Zurrpunkte als Zurrösen ausgebildet. Diese können in die Ladefläche vertieft sein.

Zweckmäßigerweise ist das Umlenkelement für den Zurrgurt als rechteckige Öse ausgebildet. Der Zurrgurt verläuft dann durch die Öse und lässt sich an dieser umlenken.

Nach einem weiteren Vorschlag ist das Umlenkelement mit dem Rückholorgan über eine Schnur verbunden.

Bei einer Weiterbildung besteht das Rückholorgan aus einem zylindrischen Gehäuse mit einem flachen Deckel, in dem eine Spule mit einer lösbaren Seitenwand zum Auf- und Abrollen der Schnur angeordnet ist.

Vorteilhaft ist im Innern der Spule eine Spiralfeder vorgesehen, die soweit vorgespannt ist, dass die Schnur sich selbsttätig bis zum Anschlag des Umlenkelementes an das Gehäuse einzieht.

Zweckmäßigerweise weist das Gehäuse eine rechteckige Mündung zur Aufnahme des Umlenkelementes auf.

### Kurze Beschreibung der Zeichnung:

Weitere Einzelheiten und Vorteile der Erfindung werden nachstehend in Verbindung mit der Zeichnung für ein bevorzugtes Ausführungsbeispiel beschrieben. Darin zeigen:
- Fig. 1: ein Fahrzeug mit einem erfindungsgemäßen Fahrzeugaufbau in unbeladenem Zustand in schematischer Rückansicht;
- Fig. 2: den Gegenstand von Fig. 1 mit einer gesicherten Ladung;
- Fig. 3: ein erfindungsgemäßes Rückholorgan in einer Explosionszeichnung;
- Fig. 4: den Gegenstand von Fig. 3 in montagefertigem Zustand.

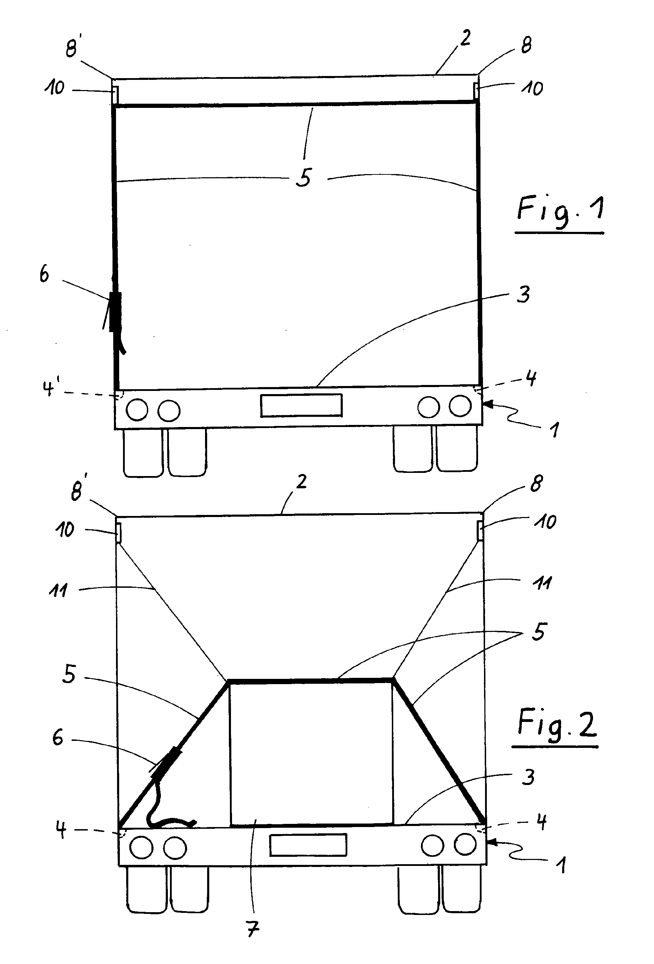

Nach den Fig. 1 und 2 besitzt ein Fahrzeug 1 einen Fahrzeugaufbau 2 mit einer Ladefläche 3 und mehreren - in Abständen aufeinander folgenden - Zurrpunkten 4 entlang der rechten Seite der Ladefläche 3 sowie analog angeordneten Zurrpunkten 4' entlang der linken Seite der Ladefläche 3. Bis dahin handelt es sich um ein übliches, schon seit langem bekanntes Transportfahrzeug. Zum erfindungsgemäßen Fahrzeugaufbau kommt es erst durch die Anordnung eine Spanngurtes 5 mit einem Spannelement 6, welcher in Fig. 1 in Ruhestellung und in Fig. 2 in Gebrauchslage mit einem Transportgut 7 dargestellt ist.

Der hier ersichtliche Spanngurt 5 gibt gleichzeitig die Position weiterer Spanngurte 5 wieder, welche auf den dargestellten Spanngurt 5 in Abständen weiter im Innern des Fahrzeugaufbaus 2 folgen. Zur Vereinfachung soll nachfolgend nur von einem Spanngurt 5 gesprochen werden, dieser aber beispielhaft für weitere Spanngurte sein, wenn solche erforderlich sind.

In Ruhestellung oder Ruhelage ist der Spanngurt 5 zunächst mit einem Ende an einem Zurrpunkt 4 angeschlossen, von da an der rechten Seite des Fahrzeugaufbaus 2 bis in den Bereich einer oberen Ecke 8 hoch geführt, dort umgelenkt bis zur gegenüberliegenden Ecke 8', und fällt von da mit seinem freien Ende nach unten in Richtung auf den Zurrpunkt 4' ab, der dem Zurrpunkt 4 gegenüberliegt. Das freie Ende kann in Ruhestellung auch mit dem Zurrpunkt 4' verbunden sein.

Jedenfalls folgt in Ruhelage der Spanngurt 5 gewissermaßen der inneren Kontur des Fahrzeugaufbaus 2 und lässt den Querschnitt des Laderaumes frei. Somit kann das Transportgut 7 unbehindert auf die Ladefläche 3 gebracht, ausgerichtet und mit dem Spanngurt 5 niedergezurrt werden, wie es im Ergebnis in Fig. 2 dargestellt ist.

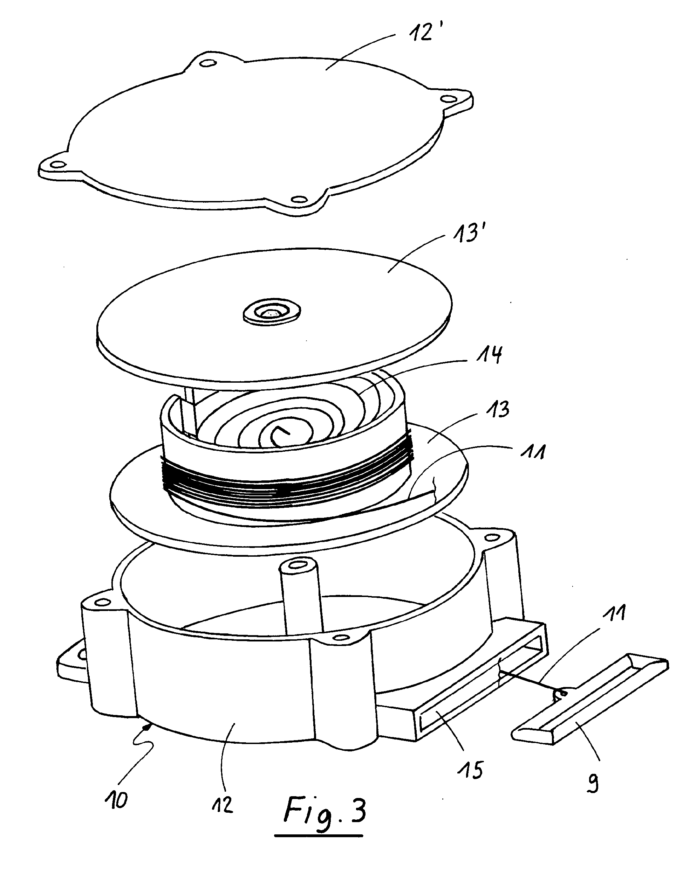

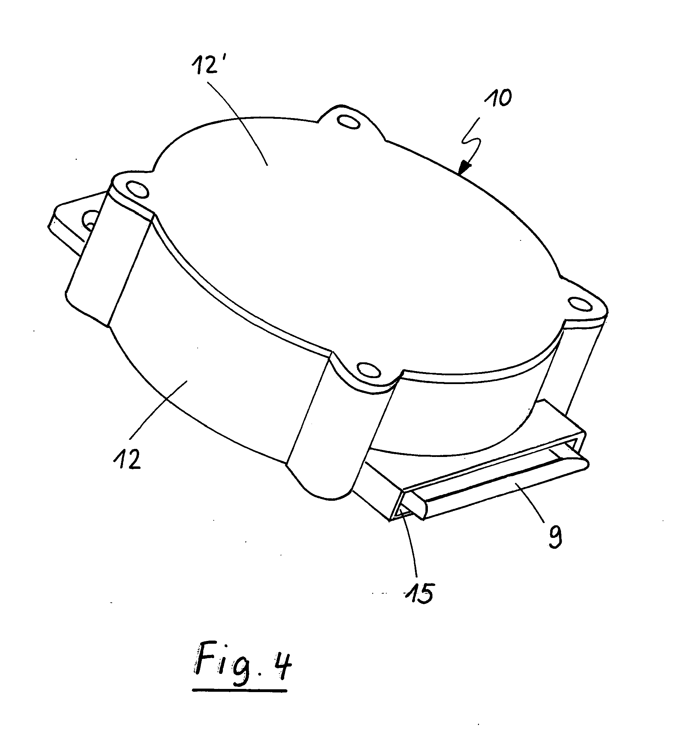

Zum näheren Verständnis muss jetzt auf die Fig. 3 und 4 verwiesen werden, welche zeigen, wie der Spanngurt 5 geführt, umgelenkt und gehalten wird. Dazu sind nämlich Umlenkelemente 9 in Form rechteckiger Ösen vorgesehen, durch die der Spanngurt 5 hindurchgeführt und an denen er umgelenkt wird (hier nicht dargestellt). Die Umlenkelemente 9 sind mit Rückholvorrichtungen oder Rückholorganen 10 verbunden, wobei für die Verbindung im vorliegenden Fall eine Schnur 11 sorgt (vgl. Fig. 2 und 3). Die Rückholorgane 10 sind oberhalb der Zurrpunkte 4 und 4' der Ladefläche 3 im Bereich der oberen Ecken 8 und 8' angeordnet (vgl. Fig. 1 und 2).

Insbesondere die Explosionszeichnung der Fig. 3 lässt weitere Einzelheiten eines Rückholorgans 10 erkennen, wie es für den vorgeschlagenen Zweck zur Anwendung kommen kann. Die hier vorgestellte Vorrichtung erscheint bereits als solche erfinderisch und könnte auch in anderem Zusammenhang Verwendung finden. Sie umfasst insbesondere ein zylindrisches Gehäuse 12 mit einem flachen Deckel 12', in dem eine Spule 13 mit einer lösbaren Seitenwand 13' geführt und gehalten ist. Die Spule 13, 13' dient zum Auf- und Abwickeln der Schnur 11.

Im Innern der Spule 13, 13' ist eine vorgespannte Spiralfeder 14 untergebracht, welche die Tendenz hat, die Schnur 11 in das Gehäuse 12, 12' einzuziehen, was aber nur bis zum Anschlag des Umlenkelementes 9 am Gehäuse 12, 12' möglich ist (vgl. Fig. 3 und 4). Schließlich weist das Gehäuse 12, 12' eine an die Gestalt des Unlenkelementes 9 angepasste Mündung 15 auf, wodurch eine bestimmte Ruhestellung definierbar ist und für das Handling solcher Rückholorgane (beispielsweise für die Montage) ein vorteilhafter Zustand gegeben ist.

Im Ergebnis lässt sich der Spanngurt 5 zur Ladungssicherung an seinem freien Ende erfassen und an das Transportgut 7 heranziehen. Der Spanngurt 5 kann dann verkürzt und mit seinem bis dahin freien Ende an dem Zurrpunkt 4' befestigt und schließlich mittels des Spannelementes 6 so unter Zug gesetzt werden, dass das Transportgut 7 dabei fest auf die Ladefläche 3 angepresst wird und sich darauf infolge der dann wirksamen Reibungskräfte sicher hält.

Die vorstehend beschriebenen Vorschläge der Erfindung erbringen eine Reihe von Vorteilen. Zunächst gilt, dass nicht nur neue Fahrzeugaufbauten davon profitieren können, vielmehr lassen sich auch vorhandene Fahrzeugaufbauten aller Art leicht im Sinne der Erfindung nachrüsten.

Für die Aufbewahrung der Spanngurte wird kein zusätzlicher Platz benötigt. Sie finden sich immer griff- und aktionsbereit an ein und denselben Stellen. Es herrscht damit eine dauerhafte Ordnung im Laderaum. Die Spanngurte bleiben sauber und trocken. Es entfällt ein lästiges Auf- und Abrollen sowie die Gefahr eines Verdrehens. Letztlich werden die Spanngurte geschont, weshalb diese länger benutzt werden können.

Die Erfindung verringert nicht zuletzt die Unfallgefahr und ermöglicht eine spürbare Zeitersparnis bei der Ladungssicherung.

### Bezugszeichenliste

- 1: Fahrzeug
- 2: Fahrzeugaufbau
- 3: Ladefläche
- 4: Zurrpunkt
- 4': Zurrpunkt
- 5: Zurrgurt
- 6: Spannelement
- 7: Transportgut
- 8: obere Ecke
- 8': obere Ecke
- 9: Umlenkelement
- 10: Rückholorgan, -vorrichtung
- 11: Schnur
- 12: Gehäuse
- 12': Deckel des Gehäuses

- 13: Spule
- 13': Seitenwand der Spule
- 14: Spiralfeder
- 15: Mündung

## Patentansprüche

1. Fahrzeugaufbau mit einer Ladefläche und Zurrpunkten entlang der Ladefläche sowie Zurrmitteln, insbesondere mit Spannelementen versehenen Zurrgurten, zum Niederzurren von Transportgütern zur Ladungssicherung, **dadurch gekennzeichnet, dass** in etwa über den Zurrpunkten (4, 4') der Ladefläche (3) in den oberen Ecken (8, 8') des Fahrzeugaufbaus (2) Umlenkelemente (9) für einen Zurrgurt (5) angeordnet sind, wobei jedes Umlenkelement (9) mit einem elastischen Rückholorgan (10) verbunden ist, welches eine beliebige Entfernung des Zurrgurtes (5) aus der Ecke (8, 8') des Fahrzeugaufbaus (2) und eine Auflage auf dem Transportgut (7) zum Zwecke der Ladungssicherung erlaubt.

2. Fahrzeugaufbau nach Anspruch 1, **dadurch gekennzeichnet, dass** die Zurrpunkte (4, 4') als Zurrösen ausgebildet sind.

3. Fahrzeugaufbau nach Anspruch 1 oder 2, **dadurch gekennzeichnet, dass** das Umlenkelement (9) für den Zurrgurt (5) als rechteckige Öse ausgebildet ist.

4. Fahrzeugaufbau nach einem der Ansprüche 1 bis 3, **dadurch gekennzeichnet, dass** das Umlenkelement (9) mit dem Rückholorgan (10) über eine Schnur (11) verbunden ist.

5. Fahrzeugaufbau nach einem der Ansprüche 1 bis 4, **dadurch gekennzeichnet, dass** das Rückholorgan (10) aus einem zylindrischen Gehäuse (12) mit einem flachen Deckel (12') besteht, in dem eine Spule (13) mit einer lösbaren Seitenwand (13') zum Auf- und Abrollen der Schnur (11) angeordnet ist.

6. Fahrzeugaufbau nach Anspruch 5, **dadurch gekennzeichnet, dass** im Innern der Spule (13, 13') eine Spiralfeder (14) vorgesehen ist, die soweit vorgespannt ist, dass die Schnur (11) sich selbsttätig bis zum Anschlag des Umlenkelementes (9) an das Gehäuse (12, 12') einzieht.

7. Fahrzeugaufbau nach Anspruch 6, **dadurch gekennzeichnet, dass** das Gehäuse (12, 12') eine rechteckige Mündung (15) zur Aufnahme des Umlenkelementes (9) aufweist.
